# EUROPÄISCHE PATENTSCHRIFT

(11) **EP 4 053 384 B1**
(45) Veröffentlichungstag und Bekanntmachung des Hinweises auf die Patenterteilung: **08.05.2024**
(21) Anmeldenummer: 21160420.2
(22) Anmeldetag: 03.03.2021
(51) Int. Cl.: F01N 3/021, F01N 3/10, F01N 13/18, F01N 3/28, F01N 13/00

(54) **ABGASNACHBEHANDLUNGSVORRICHTUNG MIT GEBÜNDELTEN ABGASREINIGUNGSSUBSTRATEN**
EXHAUST TREATMENT DEVICE WITH BUNDLED EXHAUST GAS PURIFICATION SUBSTRATES
DISPOSITIF DE TRAITEMENT ULTÉRIEUR DES GAZ D'ÉCHAPPEMENT POURVU DE SUBSTRATS MULTIPLES DE PURIFICATION DES GAZ D'ÉCHAPPEMENT

(43) Veröffentlichungstag der Anmeldung: 07.09.2022
(73) Patentinhaber: Roth Technik Austria Gesellschaft mit beschränkter Haftung, 3193 St. Aegyd a.N. (AT)
(72) Erfinder: Schenkel, Mario, 76596 Forbach (DE); Haas, Frank, 77889 Seebach (DE); Rösinger, Hans, 76467 Bietigheim (DE)
(74) Vertreter: Wiedemann, Markus

(56) Entgegenhaltungen:
- WO-A1-2014/166076
- DE-A1- 4 317 092
- JP-A- H1 181 981
- US-A1- 2003 159 436

## Beschreibung

Die Erfindung geht aus von einer Abgasnachbehandlungsvorrichtung für eine Brennkraftmaschine eines Kraftfahrzeugs, welche einen Abgasstrom der Brennkraftmaschine wenigstens teilweise von Schadstoffen befreit, gemäß dem Oberbegriff von Anspruch 1. Die Erfindung betrifft auch ein Landfahrzeug, ein Luftfahrzeug, ein Wasserfahrzeug, einen Stationärmotor oder ein Genset umfassend wenigstens eine Brennkraftmaschine, welche einen Abgasstrom erzeugt und wenigstens eine solche Abgasnachbehandlungsvorrichtung, welche den Abgasstrom der Brennkraftmaschine wenigstens teilweise von Schadstoffen befreit.

Aus dem Stand der Technik sind bei Abgasnachbehandlungsvorrichtungen mit Gehäusebaugruppen bekannt, welche Substratbaugruppen aus Partikelfilter und/oder Katalysatoren wie Oxidationskatalysator und/oder Reduktionskatalysator hausen. Dabei sind eine kompakte Bauform der Abgasnachbehandlungsvorrichtung sowie eine einfache Montage/Demontage wünschenswert.

Eine gattungsgemäße Abgasnachbehandlungsvorrichtung ist aus JP H11 81981 A bekannt. Dort sind Mäntel von zwei parallel im Abgasstrom angeordneten Filtern voneinander getrennt und werden mit Hilfe von Flanschen gegeneinander zentriert und an einem weiteren Flansch gehalten. In WO 2014/166076A1 und in DE 43 17 092 A1 sind gebündelte Abgasreinigungselemente mit Abstand getrennt voneinander in Platten gehalten. In US 2003/159436A1 sind keine gebündelt angeordneten Abgasreinigungselemente offenbart.

Der Erfindung liegt die Aufgabe zugrunde, eine Abgasnachbehandlungsvorrichtung der eingangserwähnten Art derart fortzubilden, dass sie kompakt und steif baut, bei einfacher Monate und Demontage. Ebenso soll ein Landfahrzeug, ein Luftfahrzeug oder ein Wasserfahrzeug mit einer Brennkraftmaschine, welche einen über eine Einlassöffnung eingeführten Abgasstrom der Brennkraftmaschine wenigstens teilweise von Schadstoffen befreit, und mit einer solchen Abgasnachbehandlungsvorrichtung zur Verfügung gestellt werden.

Diese Aufgabe wird erfindungsgemäß durch die Merkmale von Anspruch 1 und Anspruch 21 gelöst.

### Offenbarung der Erfindung

Die Erfindung stellt eine Abgasnachbehandlungsvorrichtung für eine Brennkraftmaschine vor, welche einen über eine Einlassöffnung eingeführten Abgasstrom der Brennkraftmaschine wenigstens teilweise von Schadstoffen befreit und ihn dann über eine Auslassöffnung ausleitet, wenigstens aufweisend
a) eine Gehäusebaugruppe umfassend
   a1) eine Eingangsgehäuseschale mit einem einlassseitigen Ende, an welchem die Einlassöffnung ausgebildet ist, und mit einem ersten Aufnahmeende, an welchem eine erste Aufnahmeöffnung und ein erster radial äußerer Befestigungsflansch ausgebildet ist, wobei das einlassseitige Ende mit einem Inneren der Eingangsgehäuseschale in Verbindung steht, und
   a2) eine Ausgangsgehäuseschale mit einem auslassseitigen Ende, an welchem die Auslassöffnung ausgebildet ist, und mit einem zweiten Aufnahmeende, an welchem eine zweite Aufnahmeöffnung und ein zweiter radial äußerer Befestigungsflansch ausgebildet ist, wobei das auslassseitige Ende mit einem Inneren der Ausgangsgehäuseschale in Verbindung steht,
b) eine Substratbaugruppe umfassend mehrere, unter Einsatz eines Rahmens oder Rahmenprofils gebündelte Abgasreinigungssubstrate, wobei
   b1) der Rahmen oder das Rahmenprofil in Umfangsrichtung gesehen die gebündelten Abgasreinigungssubstrate umgibt oder umschließt, wobei an dem Rahmen oder Rahmenprofil ein dritter radial äußerer Befestigungsflansch ausgebildet ist, und wobei
   b2) die gebündelten Abgasreinigungssubstrate einerseits mit ersten Abschnitten durch die erste Aufnahmeöffnung hindurch in das Innere der Eingangsgehäuseschale und andererseits mit zweiten Abschnitten durch die zweite Aufnahmeöffnung hindurch in das Innere der Ausgangsgehäuseschale ragen, wobei
c) der erste radial äußere Befestigungsflansch, der zweite radial äußere Befestigungsflansch und der dritte radial äußere Befestigungsflansch durch Verbindungsmittel miteinander derart lösbar verbunden sind, dass einerseits die Eingangsgehäuseschale mit der Ausgangsgehäuseschale verbunden und andererseits die Substratbaugruppe innerhalb der Gehäusebaugruppe insbesondere in definierter Lage gehalten ist.

Die Eingangsgehäuseschale und die Ausgangsgehäuseschale können jeweils einstückig oder auch mehrteilig ausgebildet sein. Insbesondere ist dann die Substratbaugruppe vollständig in der Gehäusebaugruppe gehaust.

Unter gebündelten Abgasreinigungssubstraten oder einer Bündelung von Abgasreinigungssubstraten soll ein Paket von parallel angeordneten Abgasreinigungssubstraten verstanden werden. Unter Einsatz eines Rahmens gebündelte Abgasreinigungssubstrate soll bedeuten, dass der Rahmen alleine die Abgasreinigungssubstrate beispielsweise auch unter Aufbringen von radialen Kräften zusammenhält und bündelt, oder auch, dass der Rahmen lediglich einen (kleinen) Beitrag dazu leistet, dass die Abgasreinigungssubstrate gebündelt oder zu einem Bündel zusammengefasst sind. Der Rahmen weist daher eine Durchgangsöffnung auf, in welcher das Bündel von Abgasreinigungssubstraten gehalten ist.

Die Bündelung der Abgasreinigungssubstrate zusammen mit der parallelen Durchströmung durch den Abgasstrom ermöglicht dann eine kompakte Bauform der Abgasnachbehandlungsvorrichtung. Außer dem Rahmen sind dann insbesondere keine Stützelemente wie etwa Zwischenwände vorgesehen, an welchen die Abgasreinigungssubstrate gehalten sind. Insbesondere ist die Substratbaugruppe ausschließlich mittels der Verbindungsmittel und der durch die Verbindungsmittel gegeneinander verspannten Befestigungsflansche in der Gehäusebaugruppe fixiert, zentriert und/oder in einer definierten Lage gehalten.

Die Verbindungsmittel, durch welche der erste radial äußere Befestigungsflansch, der zweite radial äußere Befestigungsflansch und der dritte radial äußere Befestigungsflansch miteinander lösbar verbunden und insbesondere gegeneinander verspannt sind, haben dann eine vorteilhafte Doppelfunktion, indem durch sie im montierten Zustand einerseits die Eingangsgehäuseschale mit der Ausgangsgehäuseschale verbunden und andererseits die Substratbaugruppe innerhalb der Gehäusebaugruppe gehalten und dort zentriert bzw. in einer definierten Lage gehalten ist.

Wenigstens nach dem Lösen der lösbaren Verbindungsmittel oder lediglich durch ein Lösen der lösbaren Verbindungsmittel und nach dem Trennen der Eingangsgehäuseschale und der Ausgangsgehäuseschale ist dann die Substratbaugruppe von der Gehäusebaugruppe demontiert.

Weiterhin weisen wenigstens einige der gebündelten Abgasreinigungssubstrate jeweils wenigstens ein Abgasreinigungselement und einen Mantel auf, welcher das wenigstes eine Abgasreinigungselement ummantelt. Beispielsweise kann das wenigstens eine Abgasreinigungselement mittels einer Lagermatte in dem Mantel insbesondere durch Reibschluss und/oder Formschluss und/oder Stoffschluss fixiert sein. Insbesondere können die Abgasreinigungssubstrate vorzugsweise identische Module ausbilden, welche jeweils wenigstens ein Abgasreinigungselement, einen Mantel und eine Lagermatte umfassen, wobei das wenigstens eine Abgasreinigungselement mittels der Lagermatte in dem Mantel fixiert ist. Diese Module sind dann gebündelt an dem Rahmen gehalten bzw. in dem Rahmen fixiert.

Zu einer kompakten Bauform trägt bei, wenn die Mäntel wenigstens einiger der gebündelten Abgasreinigungssubstrate einander insbesondere direkt kontaktieren. Unter einem direkten Kontakt ist zu verstehen, dass zwischen den Mänteln keine weiteren Bauelemente angeordnet sind.

Um die Steifigkeit der Substratbaugruppe zu erhöhen und um innere Leckagen zu vermeiden, sind die Mäntel wenigstens einiger der gebündelten Abgasreinigungssubstrate miteinander insbesondere direkt stoffschlüssig und/oder formschlüssig verbunden.

Insgesamt ergibt sich daher durch die erfindungsgemäßen Maßnahmen eine Abgasnachbehandlungsvorrichtung, welche kompakt baut und einfach montierbar und demontierbar ist.

Durch die in den Unteransprüchen aufgeführten Maßnahmen sind vorteilhafte Weiterbildungen und Verbesserungen der in Patentanspruch 1 angegebenen Erfindung möglich.

Bevorzugt können die gebündelten Abgasreinigungssubstrate Partikelfiltersubstrate, Oxidationskatalysatorsubstrate oder Reduktionskatalysatorsubstrate enthalten.

Bevorzugt weisen wenigstens einige der gebündelten Abgasreinigungssubstrate einen rechteckigen oder quadratischen Querschnitt auf, um durch direktes Nebeneinanderreihen bzw. direktes Übereinander-/Untereinanderreihen der Abgasreinigungssubstrate eine möglichst kompakte Bauform zu erreichen. Alternativ oder zusätzlich könnten wenigstens einige der Abgasreinigungssubstrate auch einen runden, zylindrischen oder ovalen Querschnitt aufweisen. Im ersten Fall können die gebündelten Abgasreinigungssubstrate zusammen einen rechteckigen oder quadratischen Querschnitt aufweisen.

Auch kann der Rahmen an den gebündelten Abgasreinigungssubstraten in Richtung der Abgasstroms gesehen in einer Symmetrieebene mittig angeordnet sein und die gebündelten Abgasreinigungssubstrate in die ersten Abschnitte und in die zweiten Abschnitte unterteilen, wobei
a) die Eingangsgehäuseschale einen ersten Aufnahmeabschnitt aufweist, in welchem die ersten Abschnitte der gebündelten Abgasreinigungssubstrate gehaust oder aufgenommen sind, und
b) die Ausgangsgehäuseschale einen zweiten Aufnahmeabschnitt aufweist, in welchem die zweiten Abschnitte der gebündelten Abgasreinigungssubstrate gehaust oder aufgenommen sind.

Die Symmetrieebene kann dann eine Trennebene zwischen der Eingangsgehäuseschale und der Ausgangsgehäuseschale bilden. Weiterhin können die Eingangsgehäuseschale und die Ausgangsgehäuseschale in Bezug auf die Symmetrieebene gespiegelt angeordnet sein. Dann ist der Schwerpunkt der Abgasnachbehandlungsvorrichtung im Wesentlichen mittig angeordnet, was eine Montage im Abgasstrang oder an tragenden Teilen (z.B. Rahmen oder Wandung) eines Fahrzeugs oder an einer Tragstruktur erleichtert. Nicht zuletzt können die Eingangsgehäuseschale und die Ausgangsgehäuseschale insbesondere im Wesentlichen identisch ausgebildet sein, wobei dann vorteilhaft die Eingangsgehäuseschale und die Ausgangsgehäuseschale als Gleichteile zur Herstellung der Gehäusebaugruppe verwendet werden können.

Auch können die ersten Abschnitte der gebündelten Abgasreinigungssubstrate und/oder die zweiten Abschnitte der gebündelten Abgasreinigungssubstrate von einem zusätzlichen Bündelungsmantel radial umschlossen sind. Dieser Bündelungsmantel trägt vorteilhaft zur Versteifung der Substratbaugruppe bei und kann beispielsweise mit dem Rahmen stoffschlüssig insbesondere durch eine insbesondere umlaufende Schweißnaht verbunden sein.

### Auch können

a) der Querschnitt des ersten Aufnahmeabschnitts und der Querschnitt des zweiten Aufnahmeabschnitt bezogen auf die Richtung des Abgasstroms oder ihre Längserstreckung in Form und/oder Größe jeweils konstant sein, und
b) sich der Querschnitt der Einlassgehäuseschale ausgehend vom ersten Aufnahmeabschnitt zum einlassseitigen Ende der Einlassgehäuseschale hin und sich der Querschnitt der Auslassgehäuseschale ausgehend vom zweiten Aufnahmeabschnitt zum auslassseitigen Ende der Auslassgehäuseschale hin reduzieren.

Bevorzugt weisen die Eingangsgehäuseschale und die Ausgangsgehäuseschale jeweils einen rechteckigen oder quadratischen Querschnitt auf. Wenn dann, wie oben bereits erwähnt, die gebündelten Abgasreinigungssubstrate zusammen einen rechteckigen oder quadratischen Querschnitt aufweisen, kann eine sehr kompakte Bauform erzielt werden, wenn beispielsweise der erste Aufnahmeabschnitt und der zweite Aufnahmeabschnitt dieselbe Querschnittsform wie die gebündelten Abgasreinigungssubstrate zusammen aufweisen.

Auch kann bei einer Ausführungsform
a) der Rahmen oder das Rahmenprofil ein umlaufendes T-Profil mit einem zentralen radialen Schenkel darstellen, an welchem der dritte radial äu-ßere Befestigungsflansch ausgebildet ist, und
b) der erste Befestigungsflansch und der zweite Befestigungsflansch jeweils durch einen radialen Schenkel eines umlaufenden L-Profils gebildet werden.

Der erste Befestigungsflansch und der zweite Befestigungsflansch sind beispielsweise an jeweils zueinander weisenden Enden der Einlassgehäuseschale und der Auslassgehäuseschale angeordnet, während die Einlassöffnung und die Auslassöffnung an den voneinander weg weisenden Enden der Einlassgehäuseschale und der Auslassgehäuseschale angeordnet sind.

Die lösbaren Verbindungsmittel können insbesondere eine Schraubverbindung und/oder eine Spannschellenverbindung umfassen. Im Falle einer Schraubverbindung weisen der erste radial äußere Befestigungsflansch, der zweiten radial äußere Befestigungsflansch und der dritte radial äußeren Befestigungsflansch beispielsweise Durchgangsbohrungen auf, durch welche Schrauben ragen und durch Muttern gekontert sind. Bei der Spannschellenverbindung kann eine Spannschelle vorgesehen sein, welche den ersten radial äußere Befestigungsflansch, den zweiten radial äußeren Befestigungsflansch und den dritten radial äußeren Befestigungsflansch durch Übergriff gegeneinander spannt.

Eine einfache Montage der Substratbaugruppe in der Gehäusebaugruppe durch die Verbindungsmittel ergibt sich, wenn insbesondere der erste radial äußere Befestigungsflansch und der zweite radial äußere Befestigungsflansch an voneinander wegweisenden Flächen des dritten radial äußeren Befestigungsflansches angeordnet sind.

Zu einer einfachen Montage trägt bei, dass die Substratbaugruppe bevorzugt ausschließlich durch die Verbindungsmittel und die mittels der Verbindungsmittel gegeneinander verspannten Befestigungsflansche in der Gehäusebaugruppe fixiert und insbesondere dort in einer definierten Lage gehalten ist.

Beispielsweise alleine durch Lösen der Verbindungsmittel die Eingangsgehäuseschale von der Ausgangsgehäuseschale getrennt und die Substratbaugruppe aus der Gehäusebaugruppe entnehmbar ist.

Bevorzugt sind die gebündelten Abgasreinigungssubstrate innerhalb der Eingangsgehäuseschale und der Ausgangsgehäuseschale vollständig gehaust und von dem Abgasstrom parallel durchströmt, um durch die Eingangsöffnung eingeleiteten Abgasstrom wenigstens teilweise von Schadstoffen zu befreien und ihn dann durch die Auslassöffnung auszuleiten.

Bevorzugt sind die Einlassgehäuseschale, die Auslassgehäuseschale und die Substratbaugruppe koaxial angeordnet, um beispielsweise Strömungsumlenkungen des Abgasstroms weitgehend zu vermeiden.

Besonders bevorzugt ist zwischen dem ersten Befestigungsflansch und dem dritten Befestigungsflansch ein erstes umlaufendes Dichtungselement und zwischen dem zweiten Befestigungsflansch und dem dritten Befestigungsflansch ein zweites umlaufendes Dichtungselement angeordnet. Außer dem ersten und zweiten Dichtungselement, welche dann die Substratbaugruppe gegenüber der Gehäusebaugruppe abdichten sind bevorzugt keine weiteren Dichtungselemente vorhanden. Insbesondere wird eine Anordnung von Dichtelementen im Heißbereich, d.h. im Bereich der Abgasreinigungssubstrate oder zwischen den Abgasreinigungssubstraten vermieden, welche durch hohe Temperaturen beschädigt werden könnten.

Die Erfindung umfasst auch ein Wasserfahrzeug (Schiff, insbesondere Container-Schiff oder Frachter), ein Luftfahrzeug, ein Landfahrzeug, ein Genset oder einen Stationärmotor umfassend wenigstens eine Brennkraftmaschine, welche einen Abgasstrom erzeugt, und wenigstens eine oben beschriebene Abgasnachbehandlungsvorrichtung, welche den Abgasstrom wenigstens teilweise von Schadstoffen befreit.

### Zeichnungen

Ausführungsbeispiele der Erfindung sind in der Zeichnung dargestellt und in der nachfolgenden Beschreibung näher erläutert. In der Zeichnung zeigt
- Fig. 1: eine perspektivische Explosionsdarstellung einer bevorzugten Ausführungsform einer Abgasnachbehandlungsvorrichtung gemäß der Erfindung;
- Fig. 2: eine perspektivische Darstellung der Abgasnachbehandlungsvorrichtung von Fig. 1 in montiertem Zustand;
- Fig. 3: eine Frontansicht der Abgasnachbehandlungsvorrichtung von Fig. 1;
- Fig. 4: einen Längsschnitt der Abgasnachbehandlungsvorrichtung von Fig. 1 entlang der Linie A-A von Fig. 3;
- Fig 5: einen Querschnitt der Abgasnachbehandlungsvorrichtung von Fig. 1 entlang der Linie B-B von Fig. 3;
- Fig. 6: eine perspektivische Einzeldarstellung einer ersten Ausführungsform einer Substratbaugruppe der Abgasnachbehandlungsvorrichtung von Fig. 1;
- Fig. 7: eine perspektivische Einzeldarstellung einer zweiten Ausführungsform einer Substratbaugruppe der Abgasnachbehandlungsvorrichtung von Fig. 1;
- Fig. 8: eine Darstellung des Details C in Fig. 4 bei der zweiten Ausführungsform;

### Beschreibung der Ausführungsbeispiele

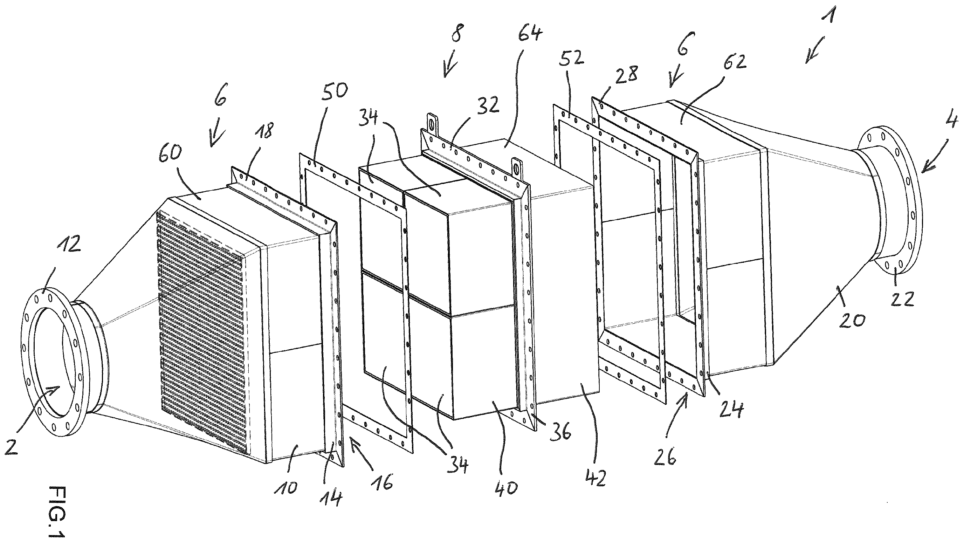

In einer bevorzugten Ausführungsform nach **Fig. 1** umfasst eine Abgasnachbehandlungsvorrichtung 1 für eine Brennkraftmaschine, welche einen über eine Einlassöffnung 2 eingeführten Abgasstrom der Brennkraftmaschine wenigstens teilweise von Schadstoffen befreit und ihn dann über eine Auslassöffnung 4 ausleitet. Die Abgasnachbehandlungsvorrichtung 1 umfasst eine hier beispielsweise zweiteilige Gehäusebaugruppe 6 und eine Substratbaugruppe 8, wobei die Substratbaugruppe 8 vorzugsweise vollständig innerhalb der Gehäusebaugruppe 6 gehaust ist.

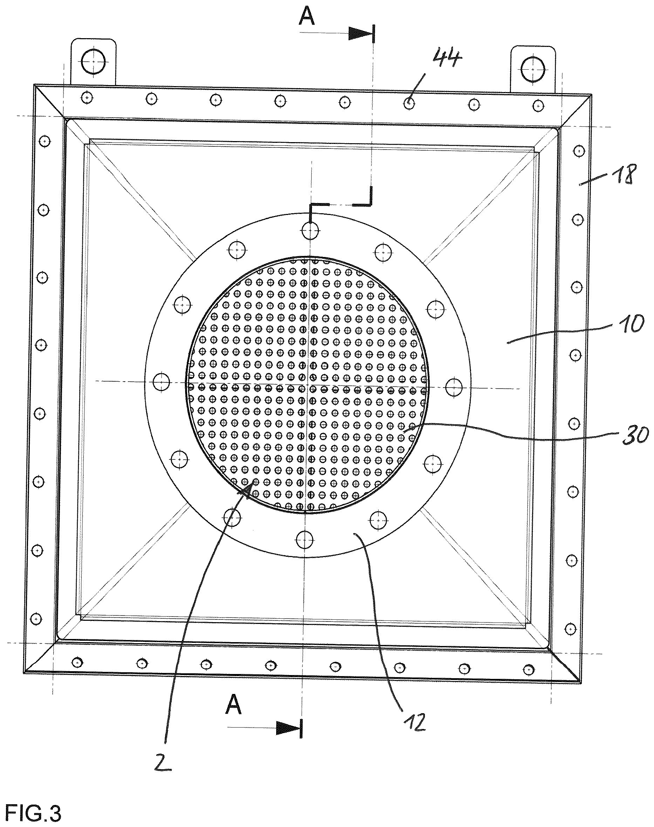

Die Gehäusebaugruppe 6 umfasst eine Eingangsgehäuseschale 10 mit einem einlassseitigen Ende 12, an welchem die Einlassöffnung 2 ausgebildet ist, und mit einem ersten Aufnahmeende 14, an welchem eine erste Aufnahmeöffnung 16 und ein erster radial äußerer Befestigungsflansch 18 ausgebildet sind, wobei das einlassseitige Ende 12 mit einem Inneren der Eingangsgehäuseschale 10 in Verbindung steht. Weiterhin umfasst die Gehäusebaugruppe 6 eine Ausgangsgehäuseschale 20 mit einem auslassseitigen Ende 22, an welchem die Auslassöffnung 4 ausgebildet ist, und mit einem zweiten Aufnahmeende 24, an welchem eine zweite Aufnahmeöffnung 26 und ein zweiter radial äußerer Befestigungsflansch 28 ausgebildet sind, wobei das auslassseitige Ende 22 mit einem Inneren der Ausgangsgehäuseschale 20 in Verbindung steht. In der Einlassöffnung 2 und in der Auslassöffnung 4 sind hier beispielsweise jeweils ein Lochblechboden 30 mit jeweils einem Lochblech angeordnet (**Fig. 3**).

Die Substratbaugruppe 8 umfasst hier beispielsweise vier durch ein hier beispielsweise im Querschnitt quadratisches oder viereckiges Rahmenprofil 32 gebündelte, ebenfalls beispielsweise im Querschnitt quadratische oder rechteckige Abgasreinigungssubstrate 34, wobei das Rahmenprofil 32 in Umfangsrichtung gesehen die gebündelten Abgasreinigungssubstrate 34 oder das Bündel von Abgasreinigungssubstraten 34 umgibt oder umschließt, wobei an dem Rahmenprofil 32 ein dritter radial äußerer Befestigungsflansch 36 ausgebildet ist. Das Rahmenprofil 32 weist daher eine Durchgangsöffnung auf, in welcher das Bündel von Abgasreinigungssubstraten 34 gehalten oder aufgenommen ist.

Die gebündelten Abgasreinigungssubstrate 34 können beispielsweise durch Partikelfiltersubstrate, Oxidationskatalysatorsubstrate oder Reduktionskatalysatorsubstrate gebildet werden, die dann von dem Abgasstrom zu Abgasreinigungszwecken durchströmt werden. Es ist dabei klar, dass jeweils nur ein Typ von Abgasreinigungssubstrat 34 vorhanden ist.

Die gebündelten Abgasreinigungssubstrate 34 ragen einerseits mit ersten Abschnitten 40 durch die erste Aufnahmeöffnung 16 hindurch in das Innere der Eingangsgehäuseschale 10 und andererseits mit zweiten Abschnitten 42 durch die zweite Aufnahmeöffnung 26 hindurch in das Innere der Ausgangsgehäuseschale 20.

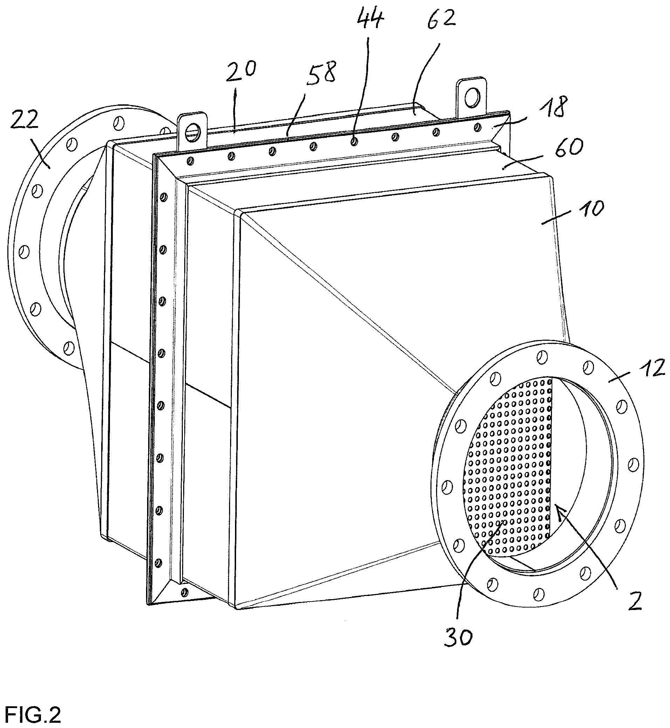

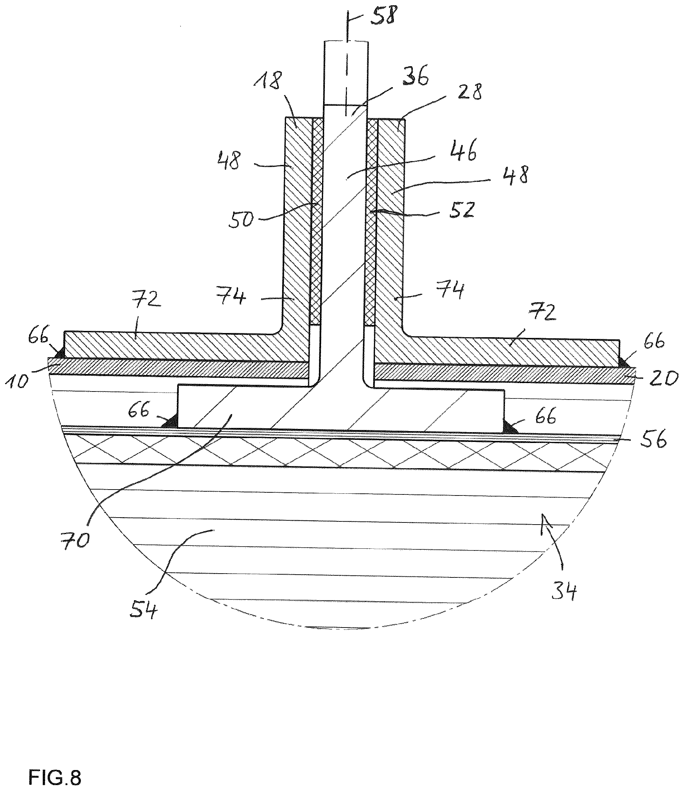

Weiterhin sind der erste radial äußere Befestigungsflansch 18, der zweite radial äußere Befestigungsflansch 28 und der dritte radial äußere Befestigungsflansch 36 durch Verbindungsmittel 44 miteinander lösbar verbunden und insbesondere gegeneinander dichtend verspannt (**Fig. 2**, **Fig. 8**). Die Verbindungsmittel 44 umfassen hier insbesondere Schraubverbindungen, wobei der erste radial äußere Befestigungsflansch 18, der zweite radial äußere Befestigungsflansch 28 und der dritte radial äußere Befestigungsflansch 36 beispielsweise Durchgangsbohrungen aufweisen, durch welche Schrauben ragen, die durch Muttern gekontert sind, um eine lösbare Verbindung zwischen der Eingangsgehäuseschale 10, der Ausgangsgehäuseschale 20 und der Substratbaugruppe 8 bzw. und deren Rahmenprofil 32 zu erzeugen.

Zusätzlich oder alternativ können die Verbindungsmittel 44 auch eine Spannschellenverbindung mit einer Spannschelle umfassen, welche beispielsweise den ersten radial äußeren Befestigungsflansch 18, den zweiten radial äußeren Befestigungsflansch 28 und den dritten radial äußeren Befestigungsflansch 36 durch Übergriff gegeneinander dichtend spannt.

Wie aus **Fig. 8** hervorgeht, kann das Rahmenprofil 32 ein umlaufendes T-Profil mit einem axialen Schenkel 70 und einem zentralen radialen Schenkel 46 darstellen, an welchem der dritte radial äußere Befestigungsflansch 36 ausgebildet ist. Dann können der erste radial äußere Befestigungsflansch 18 und der zweite radial äu-ßere Befestigungsflansch 28 jeweils durch einen radialen Schenkel 48 eines umlaufenden L-Profils 74 gebildet werden, welche jeweils an den zueinander weisenden ersten und zweiten Aufnahmeenden 14, 24 der Einlassgehäuseschale 10 und der Auslassgehäuseschale 20 angeordnet sind. Die L-Profile weisen weiterhin jeweils einen axialen Schenkel 72 auf.

Wie am besten anhand von **Fig. 1** zu sehen ist, ist zwischen dem ersten radial äußeren Befestigungsflansch 18 und dem dritten radial äußeren Befestigungsflansch 36 ein erstes umlaufendes Dichtungselement 50 und zwischen dem zweiten radial äußeren Befestigungsflansch 28 und dem dritten radial äußeren Befestigungsflansch 36 ein zweites umlaufendes Dichtungselement 52 angeordnet. Das erste umlaufende Dichtungselement 50 und das zweite umlaufende Dichtungselement 52 sind beispielsweise identisch ausgebildet. Außer dem ersten und zweiten Dichtungselement 50, 52, welche dann die Substratbaugruppe 8 gegenüber der Gehäusebaugruppe 6 abdichten sind bevorzugt keine weiteren Dichtungselemente vorhanden. Insbesondere wird eine Anordnung von Dichtungselementen im radial inneren Heißbereich, d.h. zwischen den Abgasreinigungssubstraten 34 vermieden, welche durch hohe Temperaturen beschädigt werden könnten.

Bevorzugt sorgen ausschließlich die Verbindungsmittel 44 und die durch diese gegeneinander verspannten Befestigungsflansche 18, 28 und 36 dafür, dass einerseits die Eingangsgehäuseschale 10 mit der Ausgangsgehäuseschale 20 verbunden und andererseits die Substratbaugruppe 8 innerhalb der Gehäusebaugruppe 6 insbesondere definiert gehalten ist. Zusätzlich kann aber die Substratbaugruppe 8 innerhalb der Gehäusebaugruppe 6 an wenigstens einer Zentrierfläche der Gehäusebaugruppe 6 zentriert und/oder gehalten sein.

Wenigstens nach dem Lösen der lösbaren Verbindungsmittel 44 oder lediglich durch ein Lösen der lösbaren Verbindungsmittel 44 und nach dem Trennen der Eingangsgehäuseschale 10 und der Ausgangsgehäuseschale 20 kann die Substratbaugruppe 8 aus der Gehäusebaugruppe 6 demontiert werden, wie anhand der Explosionsdarstellung von **Fig. 1** leicht vorstellbar ist.

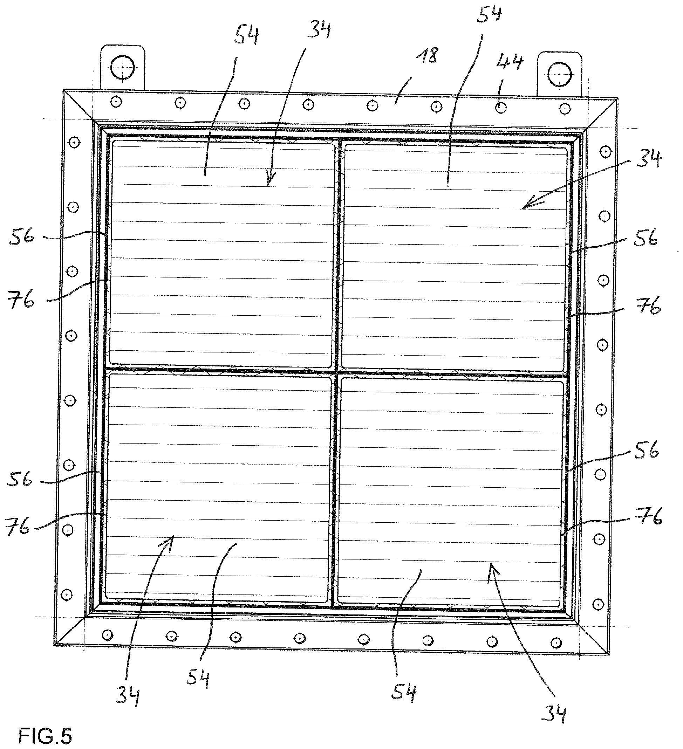

Wie insbesondere durch **Fig. 1** und **Fig. 5** veranschaulicht wird, weisen die hier beispielsweise vier gebündelten Abgasreinigungssubstrate 34 jeweils einen beispielsweise quadratischen Querschnitt auf, um durch insbesondere direktes Nebeneinanderreihen und/oder direktes Übereinander- und/oder Untereinanderreihen der Abgasreinigungssubstrate 34 eine möglichst kompakte Bauform zu erreichen.

Weiterhin weisen gemäß **Fig. 5** die Abgasreinigungssubstrate 34 jeweils ein Abgasreinigungselement 54 und einen Mantel 56 insbesondere einen Blechmantel auf, welcher das Abgasreinigungselement 54 ummantelt. Beispielsweise kann das Abgasreinigungselement 54 mittels einer umlaufenden Lagermatte 76 in dem Mantel 56 fixiert sein. Auch können mehrere Abgasreinigungselemente 54 in Richtung des Abgasstroms gesehen innerhalb eines Mantels 56 in Reihe hintereinander angeordnet sein.

Die Oberfläche der Abgasreinigungssubstrate 34 bzw. deren Mäntel 56 sind bevorzugt stufenlos glatt ausgebildet und weisen über ihre Längserstreckung, die parallel zum Abgasstrom ist, jeweils bevorzugt einen identischen, hier vorzugsweise quadratischen oder rechteckigen Querschnitt auf.

Zu einer kompakten Bauform trägt bei, wenn bevorzugt die Mäntel 56 der gebündelten Abgasreinigungssubstrate 34 einander insbesondere direkt kontaktieren. Unter einem direkten Kontakt ist zu verstehen, dass zwischen den Mänteln 56 keine weiteren Bauelemente angeordnet sind.

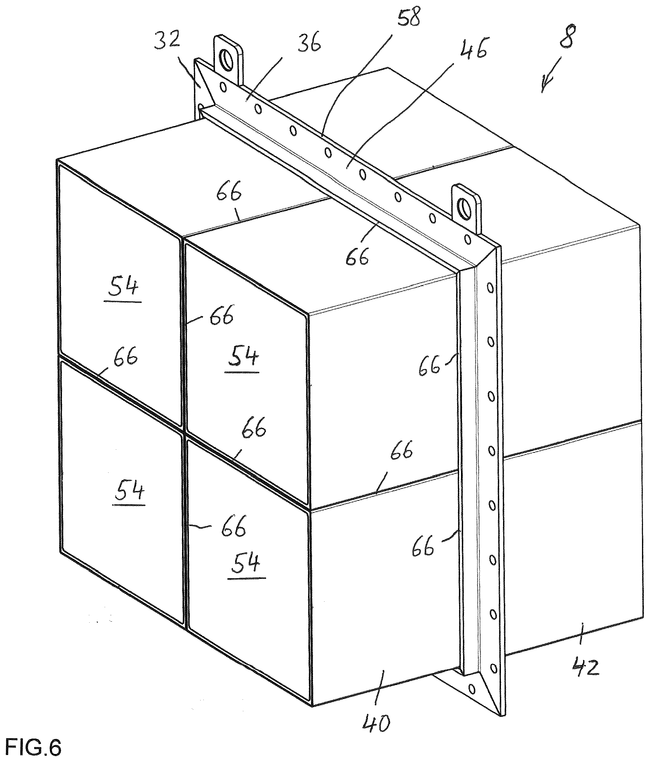

Um die Steifigkeit der Substratbaugruppe 8 zu erhöhen, sind die Mäntel 56 der gebündelten Abgasreinigungssubstrate 34 miteinander insbesondere direkt stoffschlüssig und/oder formschlüssig verbunden sein. Dies kann beispielsweise dadurch realisiert sein, dass die Mäntel 56 miteinander insbesondere durch Dichtschweißnähte 66 stellenweise oder an den Kanten der Mäntel 56 verschweißt sind. Beispielsweise sind die Mäntel 56 sowohl an den beiden Stirnflächen als auch an den Seitenflächen der Substratbaugruppe 8 durch Dichtschweißnähte 66 miteinander verschweißt, wie bei einer ersten Ausführungsform von **Fig. 6** angedeutet ist. Zusätzlich sind die Mäntel 56 bevorzugt auch durch wenigstens eine umlaufende Dichtschweißnaht 66 mit dem Rahmenprofil 32 dicht verschweißt, wobei die Dichtschweißnaht 66 beispielsweise zum einlassseitigen Ende 12 und/oder zum auslassseitigen Ende 22 weist (**Fig. 8**). Auch können die beiden axialen Schenkel 72 der beiden L-Profile 74 jeweils durch eine Dichtschweißnaht 66 mit der Eingangsgehäuseschale 10 und der Ausgangsgehäuseschale 20 dicht verschweißt sein. Insbesondere können Spalte zwischen den Mänteln 56 bzw. zwischen den gebündelten Abgasreinigungssubstraten 34 dicht verschweißt sein, um keine inneren Leckagen entstehen zu lassen. Weiterhin kann die wenigstens eine Dichtschweißnaht 66 bezogen auf die Abmessung(en) der Abgasreinigungssubstrate 34 auch lediglich partiell ausgeführt sein.

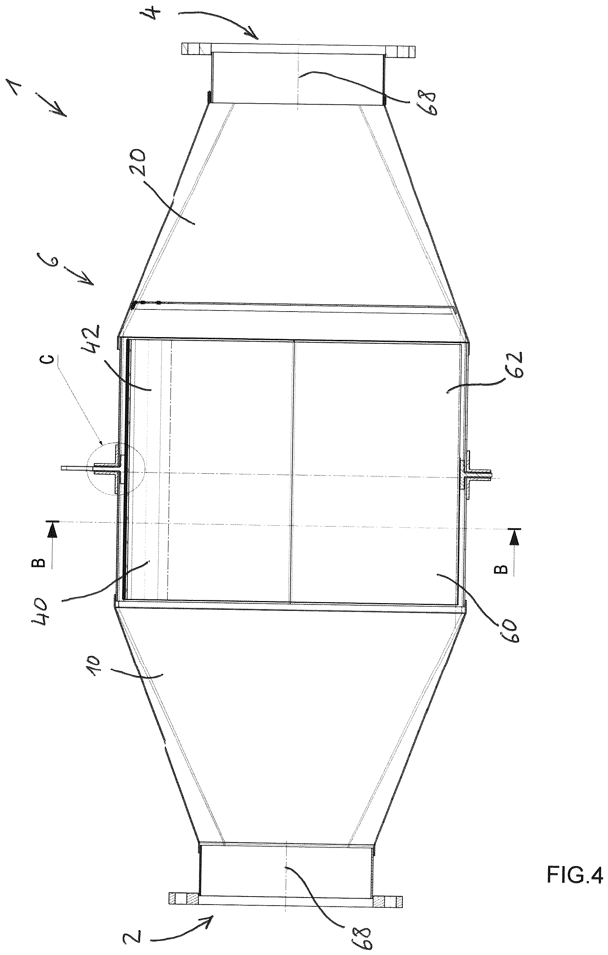

Auch kann das Rahmenprofil 32 an den gebündelten Abgasreinigungssubstraten 34 bzw. an der Substratbaugruppe 8 in Richtung der Abgasstroms gesehen in einer Symmetrieebene 58 mittig angeordnet sein und die gebündelten Abgasreinigungssubstrate 34 in erste Abschnitte 40 und zweite Abschnitte 42 unterteilen, welche dann bevorzugt gleich lang sind. Die Eingangsgehäuseschale 10 nimmt dann in einem ersten hohlen Aufnahmeabschnitt 60 die ersten Abschnitte 40 der gebündelten Abgasreinigungssubstrate 34 auf, und die Ausgangsgehäuseschale 20 in einem zweiten hohlen Aufnahmeabschnitt 62 die zweiten Abschnitte 42 der gebündelten Abgasreinigungssubstrate 34 und haust sie dort, wie anhand von **Fig. 2** und **Fig. 4** leicht vorstellbar ist.

Die Symmetrieebene 58 mit dem in ihr angeordneten Rahmenprofil 32 bildet dann auch eine Trennebene zwischen der Eingangsgehäuseschale 10 und der Ausgangsgehäuseschale 20. Weiterhin sind dann die Eingangsgehäuseschale 10 und die Ausgangsgehäuseschale 20 in Bezug auf die Symmetrieebene 58 gespiegelt angeordnet. Zusätzlich sind hier die Eingangsgehäuseschale 10 und die Ausgangsgehäuseschale 20 insbesondere im Wesentlichen identisch ausgebildet. Nicht zuletzt sind die Eingangsgehäuseschale 10, die Ausgangsgehäuseschale 20 und die Substratbaugruppe 8 koaxial in Bezug zu einer Mittelachse 68 der Abgasnachbehandlungseinrichtung 1 angeordnet (**Fig. 4**). Der Abgasstrom verläuft dann parallel zu dieser Mittelachse 68 durch die Abgasnachbehandlungseinrichtung 1 hindurch.

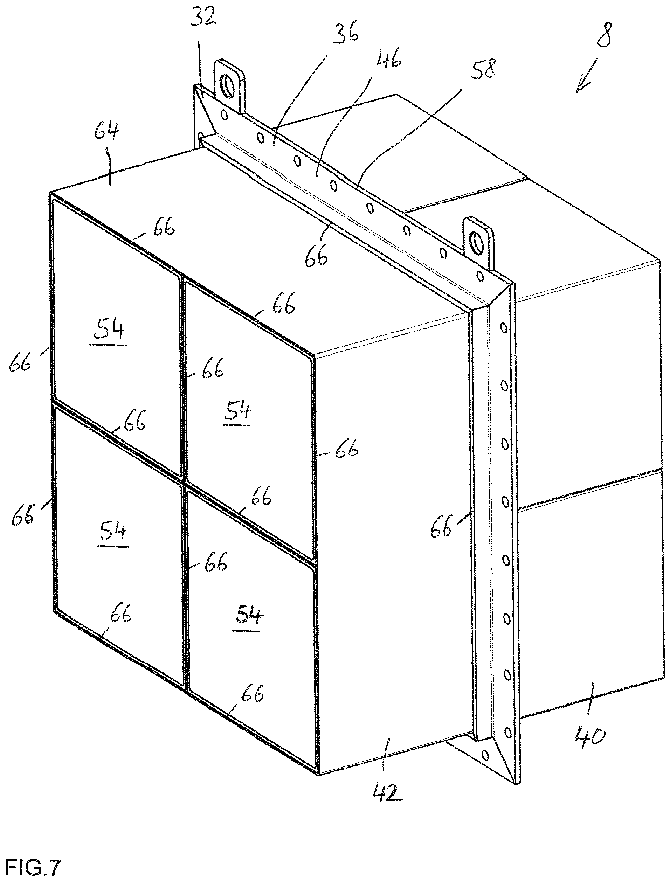

Gemäß einer in **Fig. 7** gezeigten Ausführungsform können die ersten Abschnitte 40 der gebündelten Abgasreinigungssubstrate 34 und/oder, wie hier gezeigt, die zweiten Abschnitte 42 der gebündelten Abgasreinigungssubstrate 34 auch von einem zusätzlichen Bündelungsmantel 64 radial umschlossen sein. Dieser Bündelungsmantel 64 erstreckt sich in Bezug zur axialen Längsrichtung oder in Bezug zur Richtung des Abgasstroms von dem Rahmenprofil 32 bis zu den vom Rahmenprofil 32 weg weisenden Ende der ersten Abschnitte 40 und/oder der zweiten Abschnitte 42 der gebündelten Abgasreinigungssubstrate 34. Der Bündelungsmantel 64 dann trägt vorteilhaft zur Versteifung und Dichtigkeit der Substratbaugruppe 8 bei und kann beispielsweise mit dem Rahmenprofil 32 und den gebündelten Abgasreinigungssubstraten 34 insbesondere jeweils durch eine umlaufende Dichtschweißnaht 66 verbunden sein. Wie der der Ausführungsform von **Fig. 6** sind auch bei der Ausführungsform von **Fig. 7** die Mäntel 56 an den beiden Stirnflächen durch Dichtschweißnähte 66 verschweißt.

Wie aus **Fig. 1** und **Fig. 4** hervorgeht, können der Querschnitt des ersten Aufnahmeabschnitts 60 und der Querschnitt des zweiten Aufnahmeabschnitts 62 bezogen auf die Richtung des Abgasstroms oder die Längserstreckung in Form und/oder Größe jeweils konstant sein. Weiterhin reduzieren sich der Querschnitt der Einlassgehäuseschale 10 ausgehend vom Ende des ersten Aufnahmeabschnitts 60 beispielsweise stetig zum einlassseitigen Ende 12 der Einlassgehäuseschale 10 hin wie auch der Querschnitt der Auslassgehäuseschale 20 sich ausgehend vom Ende des zweiten Aufnahmeabschnitts 62 zum auslassseitigen Ende 22 der Auslassgehäuseschale 20 hin vorzugsweise stetig.

Die ersten und zweiten Abschnitte 40, 42 der gebündelten Abgasreinigungssubstrate 34 sind in Richtung des Abgasstroms oder in axialer Längsrichtung gesehen bevorzugt im Wesentlichen jeweils so lang wie die ersten und zweiten Aufnahmeabschnitte 60, 62. Vorzugsweise kragen die ersten und zweiten Abschnitte 40, 42 der gebündelten Abgasreinigungssubstrate 34 von dem Rahmenprofil 32 frei axial aus. Mit anderen Worten sind die vom Rahmenprofil 32 wegweisenden Enden der ersten und zweiten Abschnitte 40, 42 der gebündelten Abgasreinigungssubstrate 34 frei und stützen sich bevorzugt weder an der Einlassgehäuseschale 10 noch an der Auslassgehäuseschale 20 ab, was Vorteile hinsichtlich der einzuhaltenden Toleranzen mit sich bringt. Jedoch ist auch eine Ausführungsform denkbar, bei welcher die von dem Rahmenprofil 32 wegweisenden Enden der ersten und zweiten Abschnitte 40, 42 der gebündelten Abgasreinigungssubstrate 34 im Inneren der Einlassgehäuseschale 10 und der Auslassgehäuseschale 20 abgestützt und/oder zentriert sind.

Bevorzugt weisen die Eingangsgehäuseschale 10 und die Ausgangsgehäuseschale 20 jeweils hier einen quadratischen Querschnitt auf, welcher derart komplementär zu dem quadratischen Gesamtquerschnitt der gebündelten Abgasreinigungssubstrate 34 bzw. der Substratbaugruppe 8 ausgebildet ist, dass die Substratbaugruppe 8 in der Gehäusebaugruppe 6 vollständig aufgenommen werden kann, wobei noch eine lediglich geringe lichte Weite zwischen der radial äußeren Umfangsfläche der Substratbaugruppe 6 und der radial inneren Umfangsfläche der ersten und zweiten Aufnahmeabschnitte 60, 62 vorhanden ist, damit die Eingangsgehäuseschale 10 und die Ausgangsgehäuseschale 20 nach dem Lösen der Verbindungsmittel von der Substratbaugruppe 8 axial abgezogen werden können.

Bevorzugt sind die gebündelten Abgasreinigungssubstrate 34 innerhalb der Eingangsgehäuseschale 10 und der Ausgangsgehäuseschale 20 vollständig gehaust und von dem Abgasstrom parallel und axial durchströmt, um den durch die Einlassöffnung 2 eingeleiteten Abgasstrom wenigstens teilweise von Schadstoffen zu befreien und ihn dann durch die Auslassöffnung 4 auszuleiten. Wie **Fig. 4** illustriert, sind bevorzugt die Einlassgehäuseschale 10, die Auslassgehäuseschale 20 und die Substratbaugruppe 8 sowie die Einlassöffnung 2 und die Auslassöffnung 4 koaxial zur Mittelachse 68 angeordnet.

Anhand von **Fig. 2** und **Fig. 4** ist leicht vorstellbar, dass alleine durch Lösen der Verbindungsmittel 44 die Eingangsgehäuseschale 10 von der Ausgangsgehäuseschale 20 getrennt und dann die Substratbaugruppe 8 aus der Gehäusebaugruppe 6 entnehmbar ist.

Die Erfindung umfasst auch ein Wasserfahrzeug (Schiff, insbesondere Container-Schiff oder Frachter), ein Luftfahrzeug oder ein Landfahrzeug mit wenigstens einer Brennkraftmaschine, welche einen Abgasstrom erzeugt, und mit einer oben beschriebenen Abgasnachbehandlungsvorrichtung 1, durch welche dieser Abgasstrom wenigstens teilweise von Schadstoffen befreit wird.

### Bezugszeichenliste

- 1: Abgasnachbehandlungseinrichtung
- 2: Einlassöffnung
- 4: Auslassöffnung
- 6: Gehäusebaugruppe
- 8: Substratbaugruppe
- 10: Eingangsgehäuseschale
- 12: einbauseitiges Ende
- 14: 1. Aufnahmeende
- 16: 1. Aufnahmeöffnung
- 18: 1. radial äußerer Befestigungsflansch
- 20: Ausgangsgehäuseschale
- 22: auslassseitiges Ende
- 24: 2. Aufnahmeende
- 26: 2. Aufnahmeöffnung
- 28: 2. radial äußerer Befestigungsflansch
- 30: Lochblechboden
- 32: Rahmenprofil
- 34: Abgasreinigungssubstrate
- 36: 3. radial äußerer Befestigungsflansch
- 38 40: 1. Abschnitte
- 42: 2. Abschnitte
- 44: Verbindungsmittel
- 46: radialer Schenkel
- 48: radiale Schenkel
- 50: 1. Dichtungselement
- 52: 2. Dichtungselement
- 54: Abgasreinigungselement
- 56: Mantel
- 58: Symmetrieebene
- 60: 1. Aufnahmeabschnitt
- 62: 2. Aufnahmeabschnitt
- 64: Bündelungsmantel
- 66: Dichtschweißnaht
- 68: Mittelachse
- 70: axialer Schenkel
- 72: axialer Schenkel
- 74: L-Profil
- 76: Lagermatte

## Patentansprüche

1. Abgasnachbehandlungsvorrichtung (1) für eine Brennkraftmaschine, welche einen über eine Einlassöffnung (2) eingeführten Abgasstrom der Brennkraftmaschine wenigstens teilweise von Schadstoffen befreit und ihn dann über eine Auslassöffnung (4) ausleitet, wenigstens aufweisend
a) eine Gehäusebaugruppe (6) umfassend
a1) eine Eingangsgehäuseschale (10) mit einem einlassseitigen Ende (12), an welchem die Einlassöffnung (2) ausgebildet ist, und mit einem ersten Aufnahmeende (14), an welchem eine erste Aufnahmeöffnung (16) und ein erster radial äußerer Befestigungsflansch (18) ausgebildet ist, wobei das einlassseitige Ende (12) mit einem Inneren der Eingangsgehäuseschale (10) in Verbindung steht, und
a2) eine Ausgangsgehäuseschale (20) mit einem auslassseitigen Ende (22), an welchem die Auslassöffnung (4) ausgebildet ist, und mit einem zweiten Aufnahmeende (24), an welchem eine zweite Aufnahmeöffnung (26) und ein zweiter radial äußerer Befestigungsflansch (28) ausgebildet ist, wobei das auslassseitige Ende (22) mit einem Inneren der Ausgangsgehäuseschale (20) in Verbindung steht,
b) eine Substratbaugruppe (8) umfassend mehrere, unter Einsatz eines Rahmens (32) gebündelte Abgasreinigungssubstrate (34), wobei
b1) der Rahmen (32) in Umfangsrichtung gesehen die gebündelten Abgasreinigungssubstrate (34) umgibt oder umschließt, wobei an dem Rahmen (32) ein dritter radial äußerer Befestigungsflansch (36) ausgebildet ist, und wobei
b2) die gebündelten Abgasreinigungssubstrate (34) einerseits mit ersten Abschnitten (40) durch die erste Aufnahmeöffnung (16) hindurch in das Innere der Eingangsgehäuseschale (10) und andererseits mit zweiten Abschnitten (42) durch die zweite Aufnahmeöffnung (26) hindurch in das Innere der Ausgangsgehäuseschale (20) ragen, wobei
c) der erste radial äußere Befestigungsflansch (18), der zweite radial äu-ßere Befestigungsflansch (28) und der dritte radial äußere Befestigungsflansch (36) durch Verbindungsmittel (44) miteinander derart lösbar verbunden sind, dass einerseits die Eingangsgehäuseschale (10) mit der Ausgangsgehäuseschale (20) verbunden und andererseits die Substratbaugruppe (8) innerhalb der Gehäusebaugruppe (6) gehalten ist, und wobei
d) einige der gebündelten Abgasreinigungssubstrate (34) jeweils wenigstens ein Abgasreinigungselement (54) und einen Mantel (56) aufweisen, welcher das wenigstes eine Abgasreinigungselement (54) ummantelt, **dadurch gekennzeichnet, dass**
e) die Mäntel (56) wenigstens einiger der gebündelten Abgasreinigungssubstrate (34) einander kontaktieren und miteinander stoffschlüssig und/oder formschlüssig verbunden sind.

2. Abgasnachbehandlungsvorrichtung nach Anspruch 1, **dadurch gekennzeichnet, dass** die gebündelten Abgasreinigungssubstrate (34) Partikelfiltersubstrate, Oxidationskatalysatorsubstrate oder Reduktionskatalysatorsubstrate enthalten.

3. Abgasnachbehandlungsvorrichtung nach einem der vorhergehenden Ansprüche, **dadurch gekennzeichnet, dass** wenigstens einige der gebündelten Abgasreinigungssubstrate (34)
a) einen rechteckigen, quadratischen oder polygonalen Querschnitt, und/oder
b) einen runden, ovalen oder zylindrischen Querschnitt aufweisen.

4. Abgasnachbehandlungsvorrichtung nach einem der vorhergehenden Ansprüche, **dadurch gekennzeichnet, dass** die gebündelten Abgasreinigungssubstrate (34) zusammen einen rechteckigen oder quadratischen Querschnitt aufweisen.

5. Abgasnachbehandlungsvorrichtung nach einem der vorhergehenden Ansprüche, **dadurch gekennzeichnet, dass** das wenigstens eine Abgasreinigungselement (54) mittels einer Lagermatte in dem Mantel (56) fixiert ist.

6. Abgasnachbehandlungsvorrichtung nach einem der vorhergehenden Ansprüche, **dadurch gekennzeichnet, dass** der Rahmen (32) an den gebündelten Abgasreinigungssubstraten (34) in Richtung der Abgasstroms gesehen in einer Symmetrieebene (58) mittig angeordnet ist und die gebündelten Abgasreinigungssubstrate (34) in die ersten Abschnitte (40) und in die zweiten Abschnitte (42) unterteilt, wobei
a) die Eingangsgehäuseschale (10) einen ersten Aufnahmeabschnitt 60) aufweist, in welchem die ersten Abschnitte (40) der gebündelten Abgasreinigungssubstrate (34) gehaust oder aufgenommen sind, und
b) die Ausgangsgehäuseschale (20) einen zweiten Aufnahmeabschnitt aufweist, in welchem die zweiten Abschnitte der gebündelten Abgasreinigungssubstrate gehaust oder aufgenommen sind.

7. Abgasnachbehandlungsvorrichtung nach Anspruch 6, **dadurch gekennzeichnet, dass** die ersten Abschnitte (40) der gebündelten Abgasreinigungssubstrate (34) und/oder die zweiten Abschnitte (42) der gebündelten Abgasreinigungssubstrate (34) von einem Bündelungsmantel (64) radial umschlossen sind.

8. Abgasnachbehandlungsvorrichtung nach Anspruch 6 oder 7, **dadurch gekennzeichnet, dass**
a) der Querschnitt des ersten Aufnahmeabschnitts (60) und der Querschnitt des zweiten Aufnahmeabschnitts (62) bezogen auf die Richtung des Abgasstroms oder ihre Längserstreckung in Form und/oder Größe jeweils konstant sind, und dass
b) sich der Querschnitt der Einlassgehäuseschale (10) ausgehend von einem Ende des ersten Aufnahmeabschnitts (60) zum einlassseitigen Ende (12) der Einlassgehäuseschale (10) hin reduziert und sich der Querschnitt der Auslassgehäuseschale (20) ausgehend von einem Ende des zweiten Aufnahmeabschnitts (62) zum auslassseitigen Ende (22) der Auslassgehäuseschale (20) hin reduziert.

9. Abgasnachbehandlungsvorrichtung nach einem der Ansprüche 6 bis 8, **dadurch gekennzeichnet, dass** die Symmetrieebene (58) eine Trennebene zwischen der Eingangsgehäuseschale (10) und der Ausgangsgehäuseschale (20) bildet.

10. Abgasnachbehandlungsvorrichtung nach einem der Ansprüche 6 bis 9, **dadurch gekennzeichnet, dass** die Eingangsgehäuseschale (10) und die Ausgangsgehäuseschale (20) in Bezug auf die Symmetrieebene (58) gespiegelt angeordnet sind.

11. Abgasnachbehandlungsvorrichtung nach einem der vorhergehenden Ansprüche, **dadurch gekennzeichnet, dass** die Eingangsgehäuseschale (10) und die Ausgangsgehäuseschale (20) im Wesentlichen identisch ausgebildet sind.

12. Abgasnachbehandlungsvorrichtung nach einem der vorhergehenden Ansprüche, **dadurch gekennzeichnet, dass** die Eingangsgehäuseschale (10) und die Ausgangsgehäuseschale (20) jeweils einen rechteckigen oder quadratischen Querschnitt aufweisen.

13. Abgasnachbehandlungsvorrichtung nach einem der vorhergehenden Ansprüche, **dadurch gekennzeichnet, dass**
c) der Rahmen (32) ein umlaufendes T-Profil mit einem zentralen radialen Schenkel (46) darstellt, an welchem der dritte radial äußere Befestigungsflansch (36) ausgebildet ist, und dass
d) der erste radial äußere Befestigungsflansch (18) und der zweite radial äußere Befestigungsflansch (28) jeweils durch einen radialen Schenkel (48) eines umlaufenden L-Profils gebildet werden.

14. Abgasnachbehandlungsvorrichtung nach einem der vorhergehenden Ansprüche, **dadurch gekennzeichnet, dass** die Verbindungsmittel (44) eine Schraubverbindung und/oder eine Spannschellenverbindung umfassen.

15. Abgasnachbehandlungsvorrichtung nach einem der vorhergehenden Ansprüche, **dadurch gekennzeichnet, dass** die Substratbaugruppe (8) bevorzugt ausschließlich durch die Verbindungsmittel (44) und die durch die Verbindungsmittel (44) gegeneinander verspannten radial äußeren Befestigungsflansche (18, 28, 36) in der Gehäusebaugruppe (6) in einer definierten Lage gehalten ist.

16. Abgasnachbehandlungsvorrichtung nach einem der vorhergehenden Ansprüche, **dadurch gekennzeichnet, dass** alleine durch Lösen der Verbindungsmittel (44) die Eingangsgehäuseschale (10) von der Ausgangsgehäuseschale (20) getrennt und die Substratbaugruppe (8) aus der Gehäusebaugruppe (6) entnehmbar ist.

17. Abgasnachbehandlungsvorrichtung nach einem der vorhergehenden Ansprüche, **dadurch gekennzeichnet, dass** die gebündelten Abgasreinigungssubstrate (34) innerhalb der Eingangsgehäuseschale (10) und der Ausgangsgehäuseschale (20) vollständig gehaust und von dem Abgasstrom parallel durchströmt sind, um durch die Einlassöffnung (2) eingeleiteten Abgasstrom wenigstens teilweise von Schadstoffen zu befreien und ihn dann durch die Auslassöffnung (4) auszuleiten.

18. Abgasnachbehandlungsvorrichtung nach einem der vorhergehenden Ansprüche, **dadurch gekennzeichnet, dass** der erste radial äußere Befestigungsflansch (18) und der zweite radial äußere Befestigungsflansch (28) an voneinander wegweisenden Flächen des dritten radial äußeren Befestigungsflansches (36) angeordnet sind.

19. Abgasnachbehandlungsvorrichtung nach einem der vorhergehenden Ansprüche, **dadurch gekennzeichnet, dass** wenigstens die Einlassgehäuseschale (10), die Auslassgehäuseschale (20) und die Substratbaugruppe (8) koaxial angeordnet sind.

20. Abgasnachbehandlungsvorrichtung nach einem der vorhergehenden Ansprüche, **dadurch gekennzeichnet, dass** zwischen dem ersten radial äußeren Befestigungsflansch (18) und dem dritten radial äußeren Befestigungsflansch (36) ein erstes umlaufendes Dichtungselement (50) und zwischen dem zweiten radial äußeren Befestigungsflansch (28) und dem dritten radial äußeren Befestigungsflansch (36) ein zweites umlaufendes Dichtungselement (52) angeordnet ist.

21. Wasserfahrzeug, Luftfahrzeug, Landfahrzeug, Stationärmotor oder Genset umfassend wenigstens eine Brennkraftmaschine, welche einen Abgasstrom erzeugt, und wenigstens eine Abgasnachbehandlungsvorrichtung (1), welche einen Abgasstrom der Brennkraftmaschine wenigstens teilweise von Schadstoffen befreit, nach wenigstens einem der vorhergehenden Ansprüche.

## Claims

1. Exhaust gas aftertreatment device (1) for an internal combustion engine, which at least partially removes pollutants from an exhaust gas stream of the internal combustion engine introduced via an inlet opening (2) and then discharges said exhaust gas stream via an outlet opening (4), at least having
a) a housing assembly (6) comprising
a1) an inlet housing shell (10) having an inlet-side end (12) at which the inlet opening (2) is formed, and having a first receiving end (14) at which a first receiving opening (16) and a first radially outer mounting flange (18) are formed, wherein the inlet-side end (12) communicates with an interior of the inlet housing shell (10), and
a2) an outlet housing shell (20) having an outlet-side end (22) at which the outlet opening (4) is formed, and having a second receiving end (24) at which a second receiving opening (26) and a second radially outer mounting flange (28) are formed, wherein the outlet-side end (22) communicates with an interior of the outlet housing shell (20),
b) a substrate assembly (8) comprising a plurality of exhaust gas purification substrates (34) bundled using a frame (32), wherein
b1) the frame (32) surrounds or encloses the bundled exhaust gas purification substrates (34) as viewed in the circumferential direction, wherein a third radially outer mounting flange (36) is formed on the frame (32), and wherein
b2) the bundled exhaust gas purification substrates (34) project on the one hand with first sections (40) through the first receiving opening (16) into the interior of the inlet housing shell (10) and on the other hand with second sections (42) through the second receiving opening (26) into the interior of the outlet housing shell (20), wherein
c) the first radially outer mounting flange (18), the second radially outer mounting flange (28) and the third radially outer mounting flange (36) are releasably connected to one another by connecting means (44) in such a way that, on the one hand, the inlet housing shell (10) is connected to the outlet housing shell (20) and, on the other hand, the substrate assembly (8) is held within the housing assembly (6), and wherein
d) some of the bundled exhaust gas purification substrates (34) each have at least one exhaust gas purification element (54) and a jacket (56) which encases the at least one exhaust gas purification element (54), **characterised in that**
e) the jackets (56) of at least some of the bundled exhaust gas purification substrates (34) are in contact with one another and are connected to one another in a material-locking and/or form-fitting manner.

2. Exhaust gas aftertreatment device according to claim 1, **characterised in that** the bundled exhaust gas purification substrates (34) contain particulate filter substrates, oxidation catalyst substrates or reduction catalyst substrates.

3. Exhaust gas aftertreatment device according to any one of the preceding claims, **characterised in that** at least some of the bundled exhaust gas purification substrates (34) have
a) a rectangular, square or polygonal cross-section, and/or
b) a round, oval or cylindrical cross-section.

4. Exhaust gas aftertreatment device according to any one of the preceding claims, **characterised in that** the bundled exhaust gas purification substrates (34) together have a rectangular or square cross-section.

5. Exhaust gas aftertreatment device according to any one of the preceding claims, **characterised in that** the at least one exhaust gas purification element (54) is fixed in the jacket (56) by means of a bearing mat.

6. Exhaust gas aftertreatment device according to any one of the preceding claims, **characterised in that** the frame (32) is arranged centrally on the bundled exhaust gas purification substrates (34) in a plane of symmetry (58) as viewed in the direction of the exhaust gas stream and divides the bundled exhaust gas purification substrates (34) into the first sections (40) and into the second sections (42), wherein
a) the inlet housing shell (10) has a first receiving section (60) in which the first sections (40) of the bundled exhaust gas purification substrates (34) are housed or received, and
b) the outlet housing shell (20) has a second receiving section in which the second sections of the bundled exhaust gas purification substrates are housed or received.

7. Exhaust gas aftertreatment device according to claim 6, **characterised in that** the first sections (40) of the bundled exhaust gas purification substrates (34) and/or the second sections (42) of the bundled exhaust gas purification substrates (34) are radially enclosed by a bundling jacket (64).

8. Exhaust gas aftertreatment device according to claim 6 or 7, **characterised in that**
a) the cross-section of the first receiving section (60) and the cross-section of the second receiving section (62) are each constant in shape and/or size with respect to the direction of the exhaust gas stream or the longitudinal extent thereof, and **in that**
b) the cross-section of the inlet housing shell (10) is reduced starting from one end of the first receiving section (60) towards the inlet-side end (12) of the inlet housing shell (10) and the cross-section of the outlet housing shell (20) is reduced starting from one end of the second receiving section (62) towards the outlet-side end (22) of the outlet housing shell (20).

9. Exhaust gas aftertreatment device according to any one of claims 6 to 8, **characterised in that** the plane of symmetry (58) forms a separating plane between the inlet housing shell (10) and the outlet housing shell (20).

10. Exhaust gas aftertreatment device according to any one of claims 6 to 9, **characterised in that** the inlet housing shell (10) and the outlet housing shell (20) are arranged in a mirrored manner with respect to the plane of symmetry (58).

11. Exhaust gas aftertreatment device according to any one of the preceding claims, **characterised in that** the inlet housing shell (10) and the outlet housing shell (20) are substantially identical.

12. Exhaust gas aftertreatment device according to any one of the preceding claims, **characterised in that** the inlet housing shell (10) and the outlet housing shell (20) each have a rectangular or square cross-section.

13. Exhaust gas aftertreatment device according to any one of the preceding claims, **characterised in that**
c) the frame (32) constitutes a circumferential T-profile with a central radial limb (46) on which the third radially outer mounting flange (36) is formed, and **in that**
d) the first radially outer mounting flange (18) and the second radially outer mounting flange (28) are each formed by a radial limb (48) of a circumferential L-profile.

14. Exhaust gas aftertreatment device according to any one of the preceding claims, **characterised in that** the connecting means (44) comprise a screw connection and/or a clamp connection.

15. Exhaust gas aftertreatment device according to any one of the preceding claims, **characterised in that** the substrate assembly (8) is preferably held in a defined position in the housing assembly (6) exclusively by the connecting means (44) and the radially outer mounting flanges (18, 28, 36) braced against one another by the connecting means (44).

16. Exhaust gas aftertreatment device according to any one of the preceding claims, **characterised in that** the inlet housing shell (10) can be separated from the outlet housing shell (20) and the substrate assembly (8) can be removed from the housing assembly (6) simply by releasing the connecting means (44).

17. Exhaust gas aftertreatment device according to any one of the preceding claims, **characterised in that** the bundled exhaust gas purification substrates (34) are completely housed within the inlet housing shell (10) and the outlet housing shell (20) and have the exhaust gas stream flowing through them in parallel in order to at least partially remove pollutants from the exhaust gas stream introduced through the inlet opening (2) and then discharge said exhaust gas stream through the outlet opening (4).

18. Exhaust gas aftertreatment device according to any one of the preceding claims, **characterised in that** the first radially outer mounting flange (18) and the second radially outer mounting flange (28) are arranged on surfaces of the third radially outer mounting flange (36) which point away from one another.

19. Exhaust gas aftertreatment device according to any one of the preceding claims, **characterised in that** at least the inlet housing shell (10), the outlet housing shell (20) and the substrate assembly (8) are arranged coaxially.

20. Exhaust gas aftertreatment device according to any one of the preceding claims, **characterised in that** a first circumferential sealing element (50) is arranged between the first radially outer mounting flange (18) and the third radially outer mounting flange (36) and a second circumferential sealing element (52) is arranged between the second radially outer mounting flange (28) and the third radially outer mounting flange (36).

21. Watercraft, aircraft, land vehicle, stationary engine or genset comprising at least one internal combustion engine which generates an exhaust gas stream, and at least one exhaust gas aftertreatment device (1) which at least partially frees an exhaust gas stream of the internal combustion engine from pollutants, according to at least one of the preceding claims.

## Revendications

1. Dispositif de post-traitement de gaz d'échappement (1) pour un moteur à combustion interne, qui libère au moins partiellement de substances nocives un flux de gaz d'échappement introduit par le biais d'une ouverture d'entrée (2) du moteur à combustion interne et l'évacue ensuite par le biais d'une ouverture de sortie (4), présentant au moins
a) un ensemble boîtier (6) comprenant
a1) une coque de boîtier d'entrée (10) avec une extrémité (12) côté entrée, au niveau de laquelle l'ouverture d'entrée (2) est réalisée, et avec une première extrémité de réception (14), au niveau de laquelle une première ouverture de réception (16) et une première bride de fixation (18) radialement extérieure sont réalisées, dans lequel l'extrémité côté entrée (12) est en liaison avec une partie intérieure de la coque de boîtier d'entrée (10), et
a2) une coque de boîtier de sortie (20) avec une extrémité (22) côté sortie, au niveau de laquelle l'ouverture de sortie (4) est réalisée, et avec une seconde extrémité de réception (24), au niveau de laquelle une seconde ouverture de réception (26) et une deuxième bride de fixation (28) radialement extérieure sont réalisées, dans lequel l'extrémité côté sortie (22) est en liaison avec une partie intérieure de la coque de boîtier de sortie (20),
b) un ensemble substrat (8) comprenant plusieurs substrats de purification de gaz d'échappement (34) groupés en utilisant un cadre (32), dans lequel
b1) le cadre (32) entoure ou enferme vu dans le sens périphérique les substrats de purification de gaz d'échappement (34) groupés, dans lequel une troisième bride de fixation (36) radialement extérieure est réalisée au niveau du cadre (32), et dans lequel
b2) les substrats de purification de gaz d'échappement (34) groupés font saillie d'une part avec des premières sections (40) à travers la première ouverture de réception (16) dans la partie intérieure de la coque de boîtier d'entrée (10) et d'autre part avec des secondes sections (42) à travers la seconde ouverture de réception (26) dans la partie intérieure de la coque de boîtier de sortie (20), dans lequel
c) la première bride de fixation (18) radialement extérieure, la deuxième bride de fixation (28) radialement extérieure et la troisième bride de fixation (36) radialement extérieure sont reliées entre elles de manière amovible par des moyens de liaison (44) de telle manière que d'une part la coque de boîtier d'entrée (10) soit reliée à la coque de boîtier de sortie (20) et d'autre part l'ensemble substrat (8) soit maintenu à l'intérieur de l'ensemble boîtier (6), et dans lequel
d) certains des substrats de purification de gaz d'échappement (34) groupés présentent respectivement au moins un élément de purification de gaz d'échappement (54) et une enveloppe (56) qui enveloppe le au moins un élément de purification de gaz d'échappement (54), **caractérisé en ce que**
e) les enveloppes (56) d'au moins certains des substrats de purification de gaz d'échappement (34) groupés sont en contact les unes avec les autres et sont reliées entre elles par complémentarité de matière et/ou par complémentarité de formes.

2. Dispositif de post-traitement de gaz d'échappement selon la revendication 1, **caractérisé en ce que** les substrats de purification de gaz d'échappement (34) groupés contiennent des substrats de filtre à particules, substrats de catalyseur d'oxydation ou substrats de catalyseur de réduction.

3. Dispositif de post-traitement de gaz d'échappement selon l'une quelconque des revendications précédentes, **caractérisé en ce qu'**au moins certains des substrats de purification de gaz d'échappement (34) groupés
a) présentent une section transversale rectangulaire, carrée ou polygonale, et/ou
b) une section transversale ronde, ovale ou cylindrique.

4. Dispositif de post-traitement de gaz d'échappement selon l'une quelconque des revendications précédentes, **caractérisé en ce que** les substrats de purification de gaz d'échappement (34) groupés présentent ensemble une section transversale rectangulaire ou carrée.

5. Dispositif de post-traitement de gaz d'échappement selon l'une quelconque des revendications précédentes, **caractérisé en ce que** le au moins un élément de purification de gaz d'échappement (54) est fixé au moyen d'une natte de support dans l'enveloppe (56).

6. Dispositif de post-traitement de gaz d'échappement selon l'une quelconque des revendications précédentes, **caractérisé en ce que** le cadre (32) est agencé au centre au niveau des substrats de purification de gaz d'échappement (34) groupés vu en direction du flux de gaz d'échappement dans un plan de symétrie (58) et divise les substrats de purification de gaz d'échappement (34) groupés en les premières sections (40) et en les secondes sections (42), dans lequel
a) la coque de boîtier d'entrée (10) présente une première section de réception (60), dans laquelle les premières sections (40) des substrats de purification de gaz d'échappement (34) groupés sont logées ou reçues, et
b) la coque de boîtier de sortie (20) présente une seconde section de réception, dans laquelle les secondes sections des substrats de purification de gaz d'échappement groupés sont logées ou reçues.

7. Dispositif de post-traitement de gaz d'échappement selon la revendication 6, **caractérisé en ce que** les premières sections (40) des substrats de purification de gaz d'échappement (34) groupés et/ou les secondes sections (42) des substrats de purification de gaz d'échappement (34) groupés sont radialement entourées par une enveloppe de regroupement (64).

8. Dispositif de post-traitement de gaz d'échappement selon la revendication 6 ou 7, **caractérisé en ce que**
a) la section transversale de la première section de réception (60) et la section transversale de la seconde section de réception (62) sont constantes en forme et/ou grandeur respectivement par rapport au sens du flux de gaz d'échappement ou à son étendue longitudinale, et **en ce que**
b) la section transversale de la coque de boîtier d'entrée (10) se réduit à partir d'une extrémité de la première section de réception (60) vers l'extrémité (12) côté entrée de la coque de boîtier d'entrée (10) et la section transversale de la coque de boîtier de sortie (20) se réduit à partir d'une extrémité de la seconde section de réception (62) vers l'extrémité (22) côté sortie de la coque de boîtier de sortie (20).

9. Dispositif de post-traitement de gaz d'échappement selon l'une quelconque des revendications 6 à 8, **caractérisé en ceque** le plan de symétrie (58) forme un plan de séparation entre la coque de boîtier d'entrée (10) et la coque de boîtier de sortie (20).

10. Dispositif de post-traitement de gaz d'échappement selon l'une quelconque des revendications 6 à 9, **caractérisé en ce que** la coque de boîtier d'entrée (10) et la coque de boîtier de sortie (20) sont agencées en miroir par rapport au plan de symétrie (58).

11. Dispositif de post-traitement de gaz d'échappement selon l'une quelconque des revendications précédentes, **caractérisé en ce que** la coque de boîtier d'entrée (10) et la coque de boîtier de sortie (20) sont réalisées de manière sensiblement identique.

12. Dispositif de post-traitement de gaz d'échappement selon l'une quelconque des revendications précédentes, **caractérisé en ce que** la coque de boîtier d'entrée (10) et la coque de boîtier de sortie (20) présentent respectivement une section transversale rectangulaire ou carrée.

13. Dispositif de post-traitement de gaz d'échappement selon l'une quelconque des revendications précédentes,**caractérisé en ce que**
c) le cadre (32) constitue un profil en T périphérique avec une branche (46) radiale centrale, au niveau de laquelle la troisième bride de fixation (36) radialement extérieure est réalisée, et **en ce que**
d) la première bride de fixation (18) radialement extérieure et la seconde bride de fixation (28) radialement extérieure sont formées respectivement par une branche (48) radiale d'un profil en L périphérique.

14. Dispositif de post-traitement de gaz d'échappement selon l'une quelconque des revendications précédentes, **caractérisé en ce que** les moyens de liaison (44) comprennent une liaison vissée et/ou une liaison par collier de serrage.

15. Dispositif de post-traitement de gaz d'échappement selon l'une quelconque des revendications précédentes, **caractérisé en ce que** l'ensemble substrat (8) est de préférence maintenu exclusivement par les moyens de liaison (44) et les brides de fixation (18, 28, 36) extérieures radialement serrées les unes contre les autres par les moyens de liaison (44) dans l'ensemble boîtier (6) dans une position définie.

16. Dispositif de post-traitement de gaz d'échappement selon l'une quelconque des revendications précédentes, **caractérisé en ce que** la coque de boîtier d'entrée (10) est séparée de la coque de boîtier de sortie (20) et l'ensemble substrat (8) peut être retiré de l'ensemble boîtier (6) seulement par le détachement des moyens de liaison (44).

17. Dispositif de post-traitement de gaz d'échappement selon l'une quelconque des revendications précédentes, **caractérisé en ce que** les substrats de purification de gaz d'échappement (34) groupés sont logés entièrement à l'intérieur de la coque de boîtier d'entrée (10) et de la coque de boîtier de sortie (20) et sont traversés parallèlement par le flux de gaz d'échappement afin de libérer au moins partiellement de substances nocives le flux de gaz d'échappement introduit par l'ouverture d'entrée (2) et de l'évacuer ensuite par l'ouverture de sortie (4).

18. Dispositif de post-traitement de gaz d'échappement selon l'une quelconque des revendications précédentes, **caractérisé en ce que** la première bride de fixation (18) radialement extérieure et la deuxième bride de fixation (28) radialement extérieure sont agencées au niveau de surfaces éloignées l'une de l'autre de la troisième bride de fixation (36) radialement extérieure.

19. Dispositif de post-traitement de gaz d'échappement selon l'une quelconque des revendications précédentes, **caractérisé en ce qu**'au moins la coque de boîtier d'entrée (10), la coque de boîtier de sortie (20) et l'ensemble substrat (8) sont agencés coaxialement.

20. Dispositif de post-traitement de gaz d'échappement selon l'une quelconque des revendications précédentes, **caractérisé en ce**qu'un premier élément d'étanchéité (50) périphérique est agencé entre la première bride de fixation (18) radialement extérieure et la troisième bride de fixation (36) radialement extérieure et un second élément d'étanchéité (52) périphérique est agencé entre la deuxième bride de fixation (28) radialement extérieure et la troisième bride de fixation (36) radialement extérieure.

21. Véhicule nautique, véhicule aérien, véhicule terrestre, moteur stationnaire ou groupe électrogène comprenant au moins un moteur à combustion interne qui génère un flux de gaz d'échappement, et au moins un dispositif de post-traitement de gaz d'échappement (1) qui libère au moins partiellement de substances nocives un flux de gaz d'échappement du moteur à combustion interne, selon au moins l'une quelconque des revendications précédentes.
